# NEUE EUROPÄISCHE PATENTSCHRIFT

(11) **EP 2 404 496 B2**
(45) Veröffentlichungstag und Bekanntmachung des Hinweises auf die Entscheidung über den Einspruch: **01.09.2021**
(45) Hinweis auf die Patenterteilung: 17.12.2014
(21) Anmeldenummer: 11163188.3
(22) Anmeldetag: 20.04.2011
(51) Int. Cl.: A01D 43/10, A01D 45/02

(54) **Maispflücker**
Maize picker
Cueilleur à maïs

(30) Priorität: 09.07.2010 DE 102010036306
(43) Veröffentlichungstag der Anmeldung: 11.01.2012
(73) Patentinhaber: CLAAS Selbstfahrende Erntemaschinen GmbH, 33428 Harsewinkel (DE)
(72) Erfinder: Lenti, Tibor, 5662, Csanádapáca (HU); Fuchs, Gabor, 3561, Felözsolca (HU); Esses, Sandor, 5420, Túrkeve (HU); Zegota, Thomas, 33428, Harsewinkel (DE)

(56) Entgegenhaltungen:
- EP-A1- 0 653 152
- EP-A1- 1 106 049
- WO-A1-2005/079555
- US-A- 5 330 114
- US-A- 6 116 005

## Beschreibung

Die vorliegende Erfindung betrifft einen Maispflücker gemäß dem Oberbegriff des Anspruches 1.

Maispflücker der eingangs genannten Art werden beispielsweise als Vorsatzgeräte für Mähdreschern verwendet, und dienen dazu, Maispflanzen als auch Sonnenblumenpflanzen auf dem Feld zu ernten, wobei die Maiskolben beziehungsweise Sonnenblumenköpfe gepflückt und dem Mähdrescher zugeführt werden, während die Stängel und die Blätter auf dem Feld verbleiben. Derartige Maispflücker sind mit zumindest zwei über eine Antriebswelle mit gleicher Betriebsdrehzahl angetriebenen Einzugs- und Pflückeinheiten ausgeführt, die jeweils mit einem Pflückspalt und einer Einzugseinrichtung versehen sind. Die Einzugseinrichtung zieht die Pflanzen in den Pflückspalt hinein, durch welchen Maiskolben beziehungsweise Sonnenblumenköpfe von den Pflanzen abtrennbar sind. Weiterhin weist der Maispflücker eine stromab der jeweiligen Einzugseinrichtung angeordnete Häckseleinrichtung zum Zerkleinern der Stängel der Pflanzen auf.

Aus der WO 2005/079555 A1 ist ein derartiger Maispflücker bekannt, dessen Einzugs- und Pflückeinheiten durch eine sich über die Breite des Maispflückers erstreckende Antriebswelle gemeinsam angetrieben werden. Die Einzugs- und Pflückeinheiten der Maispflücker sind jeweils mit einer Häckseleinrichtung ausgestattet, um die auf dem Feld verbleibenden Stängel zu zerkleinern, um somit ihre Verrottung zu beschleunigen und die Bodenbearbeitung zu erleichtern. Die Häckseleinrichtungen sind stromab der jeweiligen Einzugs- und Pflückeinheit angeordnet und stehen mit der Antriebswelle in Wirkverbindung. Der Antrieb der Einzugs- und Pflückeinheiten sowie ihrer Häckseleinrichtungen erfolgt über die gemeinsame Antriebswelle des Maispflückers, so dass eine Änderung der Betriebsdrehzahl, mit der die Einzugs- und Pflückeinheiten angetrieben werden, mit einer Änderung der Antriebsdrehzahl der Häckseleinrichtungen einhergeht. Dabei führt insbesondere eine Reduzierung der Betriebsdrehzahl beziehungsweise Antriebsdrehzahl der Häckseleinrichtungen zu negativen Ergebnissen im Häckselbild und verursacht zudem hohe Drehmomente im Antriebsstrang.

Aufgabe der vorliegenden Erfindung ist es daher, einen Maispflücker der eingangs genannten Art bereitzustellen, der die Auswirkungen der Drehzahlabhängigkeit der Häckseleinrichtungen von den Einzugs- und Pflückeinheiten vermeidet.

Die Aufgabe wird erfindungsgemäß durch die kennzeichnenden Merkmale des Patentanspruches 1 gelöst.

Vorteilhafte Weiterentwicklungen und Ausgestaltungen der Erfindung sind Gegenstand der jeweiligen Unteransprüche.

Gemäß dem Anspruch 1 wird vorgeschlagen, dass die Häckseleinrichtung ein Antriebsmittel aufweist, durch das die Antriebsdrehzahl der Häckseleinrichtung bei einer Änderung der Betriebsdrehzahl der Einzugs- und Pflückeinheiten adaptierbar ist. Die Adaption der Antriebsdrehzahl der Häckseleinrichtung bei einer Änderung der Betriebsdrehzahl der Einzugs- und Pflückeinheit führt zu einer Verbesserung des Häckselergebnisses, insbesondere bei einer reduzierter Betriebsdrehzahl, da die Antriebsdrehzahl der Häckseleinrichtung zumindest auf dem Niveau beibehalten werden kann, welches diese vor der Änderung der Betriebsdrehzahl hatte. Darüber hinaus lässt die Adaptierbarkeit der Antriebsdrehzahl der Häckseleinrichtung eine Erhöhung der Antriebsdrehzahl gegenüber der Betriebsdrehzahl der Einzugs- und Pflückeinheit zu. Auf diese Weise lässt sich die Leistungsaufnahme des Maispflückers optimieren, indem die Antriebsdrehzahl an die jeweilige Erntesituation anpassbar ist.

Vorzugsweise kann das Antriebsmittel eine Schaltstufe sein, über welche die Antriebswelle mit der Häckseleinrichtung verbunden ist. Die Schaltstufe ermöglicht eine definierte Vorgabe mehrerer, jedoch mindestens zweier Übersetzungsverhältnisse, um die Antriebsdrehzahl der Häckseleinrichtung gegenüber der Betriebsdrehzahl der Einzugs- und Pflückeinheit variieren zu können. Der Einsatz einer Schaltstufe wird auch den Anforderungen an den nur eingeschränkt zur Verfügung stehenden Bauraum gerecht, da diese in einfacher Weise in diesen integrierbar ist.

Vorzugsweise kann die Schaltstufe mechanisch, hydraulisch, elektro-hydraulisch oder pneumatisch betätigbar sein.

Insbesondere kann die Schaltstufe als ein formschlüssiges Getriebe ausgeführt sein. So kann die Schaltstufe beispielsweise als ein Planetengetriebesatz mit Schaltstufe und Kupplung oder als eine Stirnradstufe ausgebildet sein.

Alternativ kann die Schaltstufe als ein kraftflüssiges Getriebe ausgeführt sein. Dabei kann es sich insbesondere um ein Riemengetriebe handeln.

In bevorzugter Weiterbildung kann das Antriebsmittel als ein einzelmotorischer Antrieb ausgebildet sein, durch den die Häckseleinrichtung antreibbar ist. Hierzu kann als Antrieb ein Hydraulikmotor oder auch ein Elektromotor verwendet werden.

Vorteilhafter Weise kann die Antriebsdrehzahl stufenlos änderbar sein, was in einfacher Weise durch die Ausführung des Antriebsmittels der Häckseleinrichtung als Hydraulikmotor oder Elektromotor erreichbar ist.

Alternativ kann das Antriebsmittel als mindestens eine zumindest einen Teil der Häckseleinrichtungen der Einzugs- und Pflückeinheiten miteinander verbindende Drehmomentübertragungsvorrichtung ausgeführt sein, die unabhängig von der die Einzugs- und Pflückeinheit antreibenden Antriebswelle mit einem einstellbaren Drehmoment beaufschlagbar ist.

Hierzu kann die Drehmomentübertragungseinrichtung als mindestens eine zumindest einen Teil der Häckseleinrichtungen verbindende Welle ausgebildet sein. Ebenso wäre die Ausführung der Drehmomentübertragungseinrichtung als ein Riemenantrieb denkbar.

Die Drehmomentübertragungseinrichtung kann durch einen separaten Antrieb beaufschlagt werden, der von einer separaten Steuerungseinrichtung gesteuert wird. Die Drehmomentübertragungseinrichtung kann auch mit einem die Antriebswelle antreibenden Antriebsstrang durch ein Schaltgetriebe verbunden sein, um bei einer Änderung der über die Antriebswelle übertragenen Betriebsdrehzahl auf die Einzugs- und Pflückeinheit die von der Drehmomentübertragungseinrichtung auf die Häckseleinrichtung zu übertragende Antriebsdrehzahl adaptieren zu können.

Weiterhin betrifft die vorliegende Erfindung eine selbstfahrende Erntemaschine mit einem Maispflücker, die dadurch gekennzeichnet ist, dass die Antriebsdrehzahl der Häckseleinrichtung in Abhängigkeit von der Vorfahrtgeschwindigkeit der selbstfahrenden Erntemaschine regelbar ist. Eine Reduzierung der Vorfahrtgeschwindigkeit führt zu einer Reduzierung der Betriebsdrehzahl der Einzugs- und Pflückeinheiten. Die Antriebsdrehzahl der Häckseleinrichtungen wird bei einer Änderung der Betriebsdrehzahl der Einzugs- und Pflückeinheiten adaptiert, um eine gegenüber der Betriebsdrehzahl höhere Antriebsdrehzahl beibehalten zu können, wenn die Vorfahrtgeschwindigkeit respektive die Antriebsdrehzahl abnehmen.

Die Erfindung wird nachstehend anhand von in den Zeichnungen dargestellten Ausführungsbeispielen näher erläutert.

Es zeigen:
- Fig. 1: eine Draufsicht auf eine schematisiert dargestellte Einzugs- und Pflückeinheit in einer ersten Ausführungsform;
- Fig. 2: eine Seitenansicht eines schematisiert dargestellten Maispflückers;
- Fig. 3: eine Draufsicht auf eine schematisiert dargestellte Einzugs- und Pflückeinheit in einer zweiten Ausführungsform;
- Fig. 4: eine Draufsicht auf eine schematisiert dargestellte Einzugs- und Pflückeinheit in einer dritten Ausführungsform.

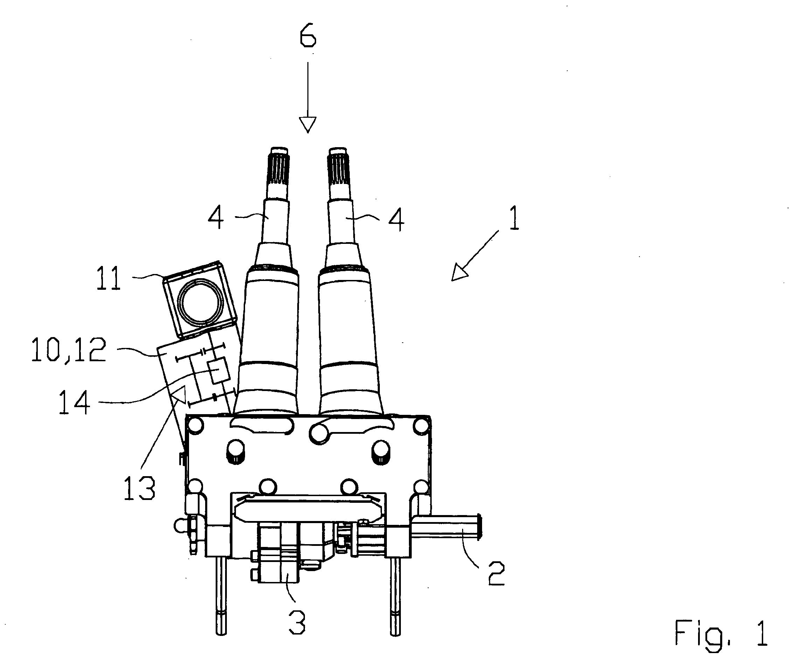

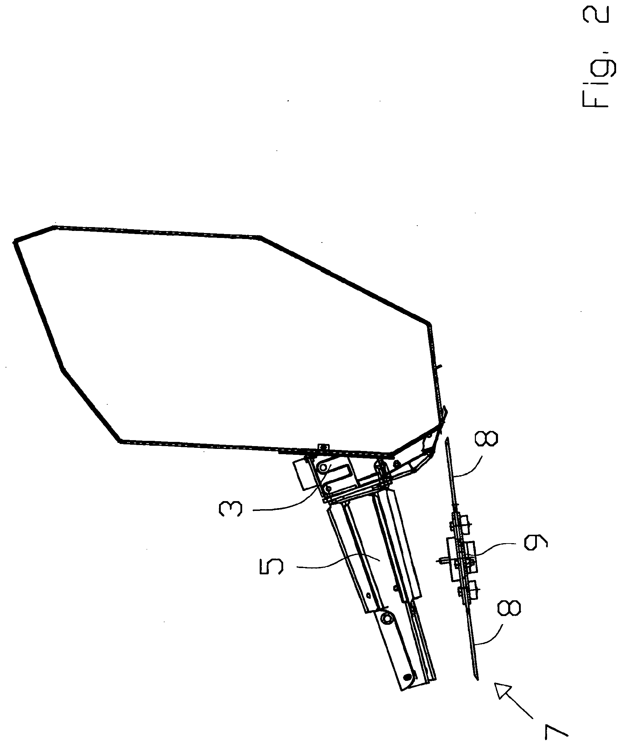

Fig. 1 zeigt eine Draufsicht auf eine schematisiert dargestellte einzelne Einzugs- und Pflückeinheit 1 eines mehrere Einzugs- und Pflückeinheit 1 umfassenden Maispflückers in einer ersten Ausführungsform. Die Einzugs- und Pflückeinheit 1 weist ein Pflückergetriebe 3 auf, welches ein von einer Antriebswelle 2 des Maispflückers bereitgestelltes Drehmoment, das von einer landwirtschaftlichen Erntemaschine auf die Antriebswelle 2 übertragen wird, auf eine Einzugseinrichtung überträgt, die parallel nebeneinander angeordnete Pflückwalzen-Antriebswellen 4 auf denen Pflückwalzen 5, wie sie in Fig. 2 dargestellt sind, angeordnet sind, aufweist. Zwischen den Pflückwalzen 5 bildet sich ein Pflückspalt 6 aus, durch welchen Furchtstände von den Pflanzen abtrennbar sind. Hierzu ist die Einzugseinrichtung von einem nicht dargestellten Pflückerrahmen umfasst, auf dem den Pflückspalt 6 begrenzende Absteifmesser und Abstreifleisten vorgesehen sind. Stromab der jeweiligen Einzugseinrichtung ist eine Häckseleinrichtung 7 zum Zerkleinern der Stängel der Pflanzen angeordnet, die um eine vertikale Achse rotierende Messer 8, welche an einem Messerträger 9 befestigt sind, wie aus der Darstellung in Fig. 2 ersichtlich ist.

Die Häckseleinrichtung 7 weist ein Antriebsmittel 10 auf, an welchem der die Messer 8 tragende Messerträger 9 angeordnet ist. Das Antriebsmittel 10 steht mit der Antriebswelle 2 des Maispflückers in Wirkverbindung. In dem Gehäuse 10 ist ein Kegelradsatz vorgesehen, um das für den Antrieb der Häckseleinrichtung 7 erforderliche Antriebsmoment, welches von dem Antriebsmittel 10 von der Antriebswelle abgegriffen wird, in einem festen Übersetzungsverhältnis zu übertragen.

Das Antriebsmittel 10 ist in der in Fig. 1 und 2 dargestellten Ausführungsform als eine Schaltstufe 12 ausgeführt, welche ein im vorliegenden Fall zweistufiges Getriebe 13 umfasst, das durch eine Kupplung 14 betätigbar ist welche zudem eine Sicherungsfunktion bei einer Überlastung der Häckseleinrichtung 7 ausübt. Die Betätigung der Kupplung 14 ermöglicht es, dass das von der Antriebswelle 2 bereitgestellte Antriebsmoment mit einem ersten Übersetzungsverhältnis i1 oder mit einem zweiten Übersetzungsverhältnis i2 auf die Häckseleinrichtung 7 übertragen wird. Eine entsprechende Abwandlung des Getriebes 13 lässt auch eine größere Anzahl an Übersetzungsverhältnissen zu. Die Betätigung der Kupplung 14 kann lastfrei im Stillstand der Einzugs- und Pflückeinheit 1 erfolgen, um bei einem sich verschlechternden Häckselergebnis die Antriebsdrehzahl der Häckseleinrichtungen 7 zu verändern, oder unter Last, wenn sich die Vorfahrtgeschwindigkeit einer den Maispflücker tragenden und antreibenden landwirtschaftlichen Erntemaschine verändert, insbesondere wenn diese abnimmt. Die Reduzierung der Vorfahrtgeschwindigkeit hat zur Folge, dass das von der Antriebswelle 2 bereitgestellte Antriebsdrehmoment respektive die Betriebsdrehzahl der Einzugs- und Pflückeinheit 1 abnimmt. Bei Maispflückern gemäß dem Stand der Technik führt dies dazu, dass damit einhergehend auch die Antriebsdrehzahl der Häckseleinrichtung 7 abnimmt, was zu negativen Ergebnissen im Häckselbild führt und zudem hohe Drehmomente im Antriebsstrang verursacht.

Durch das zwischen die Antriebswelle 2 und die Häckseleinrichtung 7 zwischengeschaltete Antriebsmittel 10 in Form einer Schaltstufe 12 wird erreicht, dass die Antriebsdrehzahl der Häckseleinrichtung 7 bei einer Änderung der Betriebsdrehzahl der Einzugs- und Pflückeinheit 1, die aus einer Änderung der Vorfahrtgeschwindigkeit resultiert, adaptierbar ist. Hierzu lässt sich bei einem Unterschreiten einer vorgebbaren Betriebsdrehzahl die Schaltstufe 12 automatisiert betätigen, um das Übersetzungsverhältnis in der Schaltstufe 12 derart zu verändern, dass die Häckseleinrichtung 7 mit einer höheren Antriebsdrehzahl arbeitet, als, wie im Stand der Technik üblich, durch die Betriebsdrehzahl der Einzugs- und Pflückeinheit 1 vorgegeben würde.

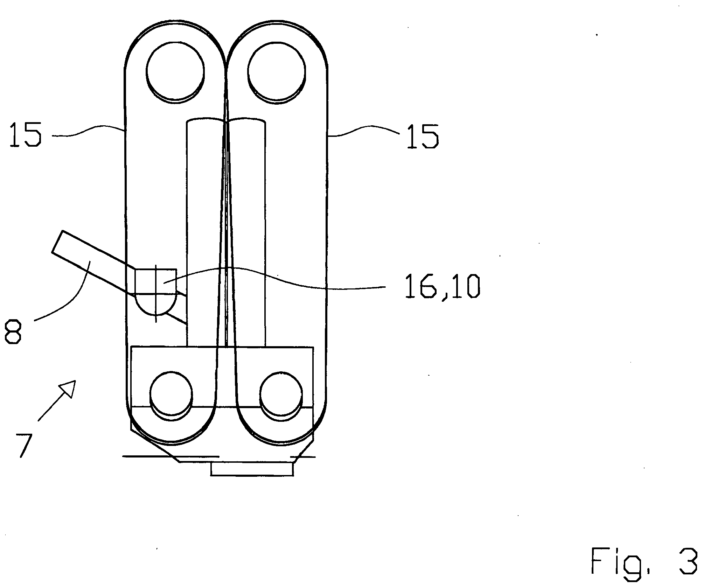

Die Darstellung in Fig. 3 zeigt eine zweite Ausführungsform einer Einzugs- und Pflückeinheit 1 eines Maispflückers. In Fig. 3 ist eine Draufsicht auf eine schematisiert dargestellte einzelne Einzugs- und Pflückeinheit 1 dargestellt, die weitere Einzelteile der Einzugs- und Pflückeinheit 1 zeigt. Wie aus der Darstellung in Fig. 3 ersichtlich ist, weist die Einzugs- und Pflückeinheit 1 weiterhin eine Förderkette 15 auf, die dem Einzug der Stängel der Pflanzen dient, deren Furchtstände im Pflückspalt 6 abgestriffen werden. Diese zweite Ausführungsform unterscheidet sich von der in den Fig. 1 und 2 dargestellten dahingehend, dass die jeweilige Häckseleinrichtung 7 ein Antriebsmittel 10 aufweist, welches als ein einzelmotorischer Antrieb 16 ausgeführt ist.

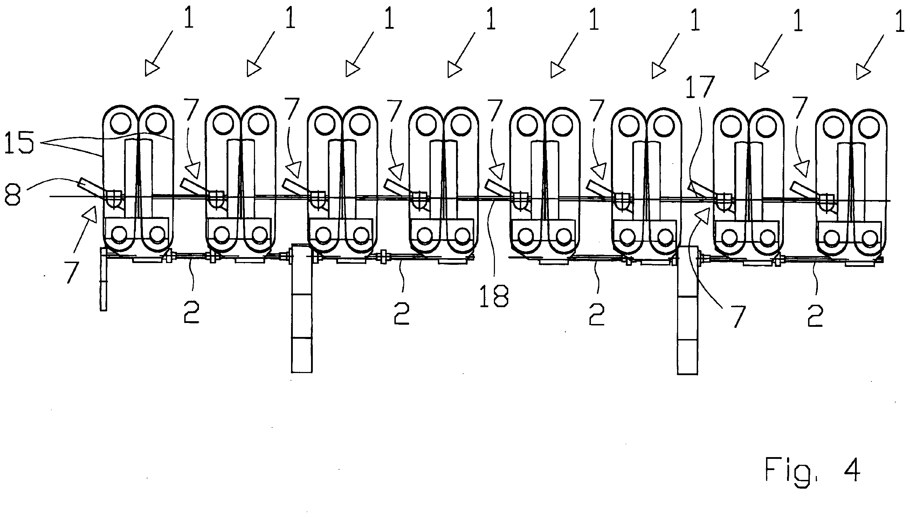

In Fig. 4 ist eine dritte Ausführungsform einer Einzugs- und Pflückeinheit 1 eines Maispflückers dargestellt. Die Darstellung zeigt eine schematische Ansicht von oben auf einen Maispflücker, bestehend aus mehreren nebeneinander angeordneten Einzugs- und Pflückeinheiten 1, wie sie bereits beschrieben worden sind. Bei dieser dritten Ausführungsform ist das Antriebsmittel 10 der Häckseleinrichtung als eine alle Häckseleinrichtungen 7 des Maispflückers miteinander verbindende Drehmomentübertragungsvorrichtung 17 ausgeführt. Bei der Drehmomentübertragungsvorrichtung 17 kann es sich beispielsweise um eine durchgehende Welle 18 handeln, die unabhängig von der die Einzugs- und Pflückeinheiten 1 antreibenden Antriebswelle 2 angetrieben wird oder mit dieser über eine Schaltstufe verbunden ist.

### Bezugszeichenliste

- 1: Einzugs- und Pflückeinheit
- 2: Antriebswelle
- 3: Pflückergetriebe
- 4: Pflückwalzenantriebswellen
- 5: Pflückwalze
- 6: Pflückspalt
- 7: Häckseleinrichtung
- 8: Messer
- 9: Messerträger
- 10: Antriebsmittel
- 11: Gehäuse
- 12: Schaltstufe
- 13: Getriebe
- 14: Kupplung
- 15: Förderkette
- 16: einzelmotorischer Antrieb
- 17: Drehmomentübertragungsvorrichtung
- 18: Welle

## Patentansprüche

1. Maispflücker mit zumindest zwei über eine Antriebswelle (2) mit gleicher Betriebsdrehzahl angetriebenen Einzugs- und Pflückeinheiten (1) die jeweils mit einer Einzugseinrichtung (4, 5, 15) mit Pflückwalzen (5) zwischen denen sich ein Pflückspalt (6) bildet versehen sind, welche die Pflanzen in den Pflückspalt (6) einzieht, durch welchen Fruchtstände von den Pflanzen abtrennbar sind, sowie einer stromab der jeweiligen Einzugseinrichtung (4, 5, 15) angeordneten Häckseleinrichtung (7) zum Zerkleinern der Stängel der Pflanzen, **dadurch gekennzeichnet, dass**
die Häckseleinrichtung (7) ein Antriebsmittel (10, 12, 16, 17) aufweist, das zur Adaption der Antriebsdrehzahl der Häckseleinrichtung (7) bei einer Änderung der Betriebsdrehzahl der Einzugs- und Pflückeinheiten (1) derart ausgebildet ist, dass die Antriebsdrehzahl bei reduzierter Betriebsdrehzahl zumindest auf dem Niveau beibehalten wird, welches die Antriebsdrehzahl vor der Änderung der Betriebsdrehzahl hatte, und/oderdass die Häckseleinrichtung eine Erhöhung der Aritriebsdrehzahl gegenüber der Betriebsdrehzahl zulässt.

2. Maispflücker nach Anspruch 1, **dadurch gekennzeichnet, dass** das Antriebsmittel (10) eine Schaltstufe (12) ist, über welche die Antriebswelle (2) mit der Häckseleinrichtung (7) antriebsverbunden ist.

3. Maispflücker nach Anspruch 2, **dadurch gekennzeichnet, dass** die Schaltstufe (12) mechanisch, hydraulisch, pneumatisch oder elektro-hydraulisch betätigbar ist.

4. Maispflücker nach einem der Ansprüche 2 oder 3, **dadurch gekennzeichnet, dass** die Schaltstufe (12) als ein formschlüssiges Getriebe ausgeführt ist.

5. Maispflücker nach einem der Ansprüche 2 oder 3, **dadurch gekennzeichnet, dass** die Schaltstufe (12) als ein kraftschlüssiges Getriebe ausgeführt ist.

6. Maispflücker nach Anspruch 1, **dadurch gekennzeichnet, dass** das Antriebsmittel (10) als ein separater Antrieb (16, 17) ausgebildet ist, durch den die Häckseleinrichtung (7) antreibbar ist.

7. Maispflücker nach Anspruch 6, **dadurch gekennzeichnet, dass** die Antriebsdrehzahl des separaten Antriebes (16, 17) stufenlos einstellbar ist.

8. Maispflücker nach einem der Ansprüche 6 oder 7, dass der separate Antrieb als ein einzelmotorischer Antrieb (16) der Häckseleinrichtung (7) ausgeführt ist.

9. Maispflücker nach einem der Ansprüche6 oder 7, **dadurch gekennzeichnet, dass** das Antriebsmittel (10) als mindestens eine zumindest einen Teil der Häckseleinrichtungen (7) der Einzugs- und Pflückeinheiten (1) miteinander verbindende Drehmomentübertragungsvorrichtung (17) ausgeführt ist, die unabhängig von der die Einzugs- und Pflückeinheiten (1) antreibenden Antriebswelle (2) mit einem einstellbaren Drehmoment beaufschlagbar ist.

10. Selbstfahrende Erntemaschinen mit einem Maispflücker nach einem der Ansprüche 1 bis 9, **dadurch gekennzeichnet, dass** die Antriebsdrehzahl der Häckseleinrichtung (7) in Abhängigkeit von der Vorfahrtgeschwindigkeit der selbstfahrenden Erntemaschine regelbar ist.

## Claims

1. A corn picker comprising at least two feed-in and picking units (1) which are driven at the same operating speed by way of a drive shaft (2) and which are respectively provided with a feed-in device (4, 5, 15) having picking rollers (5) between which a picking gap (6) is formed which pulls the plants into the picking gap (6), by which fruit groups can be separated from the plants, and a chopping device (7) arranged downstream of the respective feed-in device (4, 5, 15) for chopping up the stalks of the plants,
**characterised in that**
the chopping device (7) has a drive means (10, 12, 16, 17) which is designed for adaption of the drive speed of the chopping device (7) upon a change in the operating speed of the feed-in and picking units (1) in such a way that upon a reduced operating speed the drive speed is maintained at least at the level which the drive speed had before the change in the operating speed and/or the chopping device permits an increase in the drive speed with respect to the operating speed.

2. A corn picker according to claim 1 **characterised in that** the drive means (10) is a shift stage (12), by way of which the drive shaft (2) is drivingly connected to the chopping device (7).

3. A corn picker according to claim 2 **characterised in that** the shift stage (12) is actuable mechanically, hydraulically, pneumatically or electro-hydraulically.

4. A corn picker according to one of claims 2 and 3 **characterised in that** the shift stage (12) is in the form of a positively locking transmission.

5. 4. A corn picker according to one of claims 2 and 3 **characterised in that** the shift stage (12) is in the form of a force-locking transmission.

6. A corn picker according to claim 1 **characterised in that** the drive means (10) is in the form of a separate drive (16, 17) by which the chopping device (7) is drivable.

7. A corn picker according to claim 6 **characterised in that** the drive speed of the separate drive (16, 17) is steplessly adjustable.

8. A corn picker according to one of claims 6 and 7 **characterised in that** the separate drive is in the form of a single-motor drive (16) of the chopping device (7).

9. A corn picker according to one of claims 6 and 7 **characterised in that** the drive means (10) is in the form of at least one torque-transmitting device (17) which connects together at least a part of the chopping devices (7) of the feed-in and picking units (1) and which can be acted upon with an adjustable torque independently of the drive shaft (2) driving the feed-in and picking units (1).

10. A self-propelled harvester having a corn picker according to one of claims 1 to 9 **characterised in that** the drive speed of the chopping device (7) can be regulated in dependence on the speed of forward travel of the self-propelled harvester.

## Revendications

1. Cueilleur de maïs comprenant au moins deux unités d'introduction et de cueillage (1) entraînées à la même vitesse de rotation de fonctionnement par un arbre d'entraînement (2), lesquelles sont pourvues chacune d'un dispositif d'introduction (4, 5, 15) avec des rouleaux cueilleurs (5) entre lesquels est ménagée une fente de cueillage (6), lequel introduit les plantes dans la fente de cueillage (6) par l'intermédiaire de laquelle des infrutescences sont séparées des plantes, ainsi que comprenant un dispositif de hachage (7) disposé en aval du dispositif d'introduction (4, 5, 15) respectif pour broyer les tiges des plantes, **caractérisé en ce que** le dispositif de hachage (7) présente un moyen d'entraînement (10, 12, 16, 17) qui est conçu pour adapter la vitesse de rotation d'entraînement du dispositif de hachage (7) en cas de variation de la vitesse de rotation de fonctionnement des unités d'introduction et de cueillage (1), de façon que, à vitesse de rotation de fonctionnement réduite, la vitesse de rotation d'entraînement soit maintenue au moins au niveau que la vitesse de rotation d'entraînement avait avant la variation de la vitesse de rotation de fonctionnement, et/ou **en ce que** le dispositif de hachage autorise une élévation de la vitesse de rotation d'entraînement par rapport à la vitesse de rotation de fonctionnement.

2. Cueilleur de maïs selon la revendication 1, **caractérisé en ce que** le moyen d'entraînement (10) est un étage de transmission (12) par l'intermédiaire duquel l'arbre d'entraînement (2) est en liaison d'entraînement avec le dispositif de hachage (7).

3. Cueilleur de maïs selon la revendication 2, **caractérisé en ce que** l'étage de transmission (12) peut être actionné de façon mécanique, hydraulique, pneumatique ou électrohydraulique.

4. Cueilleur de maïs selon l'une des revendications 2 ou 3, **caractérisé en ce que** l'étage de transmission (12) est réalisé sous la forme d'une transmission par conjugaison de formes.

5. Cueilleur de maïs selon l'une des revendications 2 ou 3, **caractérisé en ce que** l'étage de transmission (12) est réalisé sous la forme d'une transmission par conjugaison de forces.

6. Cueilleur de maïs selon la revendication 1, **caractérisé en ce que** le moyen d'entraînement (10) est réalisé sous la forme d'un entraînement séparé (16, 17) par l'intermédiaire duquel le dispositif de hachage (7) peut être entraîné.

7. Cueilleur de maïs selon la revendication 6, **caractérisé en ce que** la vitesse de rotation d'entraînement de l'entraînement séparé (16, 17) est réglable de façon continue.

8. Cueilleur de maïs selon l'une des revendications 6 ou 7, **caractérisé en ce que** l'entraînement séparé est réalisé sous la forme d'un entraînement à moteur individuel (16) du dispositif de hachage (7) .

9. Cueilleur de maïs selon l'une des revendications 6 ou 7, **caractérisé en ce que** le moyen d'entraînement (10) est réalisé sous la forme d'au moins un dispositif de transmission de couple (17) qui relie entre eux au moins une partie des dispositifs de hachage (7) des unités d'introduction et de cueillage (1) et qui peut être soumis à un couple réglable indépendamment de l'arbre d'entraînement (2) entraînant les unités d'introduction et de cueillage (1).

10. Machine de récolte automotrice comprenant un cueilleur de maïs selon l'une des revendications 1 à 9, **caractérisée en ce que** la vitesse de rotation d'entraînement du dispositif de hachage (7) est réglable en fonction de la vitesse de marche avant de la machine de récolte automotrice.
